# EUROPEAN PATENT SPECIFICATION

(11) **EP 3 645 437 B1**
(45) Date of publication and mention of the grant of the patent: **13.10.2021**
(21) Application number: 18743690.2
(22) Date of filing: 27.06.2018
(51) Int. Cl.: B65H 75/14, E04G 21/12, B65H 75/22, B65H 75/50, G01P 3/484

(54) **REBAR TIE WIRE REELS FOR REINFORCING BAR BINDING MACHINERY**
BEWEHRUNGSSTABBINDEDRAHTROLLEN FÜR BEWEHRUNGSSTABBINDEMASCHINEN
BOBINES DE FIL DE LIGATURE DE BARRES D'ARMATURE POUR MACHINE DE LIAISON DE BARRES D'ARMATURE

(30) Priority: 28.06.2017 GB 201710375; 10.07.2017 GB 201711047
(43) Date of publication of application: 06.05.2020
(73) Proprietor: Sympafix BV, 1812 RR Alkmaar (NL)
(72) Inventor: GEUVERS, Paul, 1812 RR Alkmaar (NL); BOECKX, Bert, 1812 RR Alkmaar (NL)
(74) Representative: Baldwin, Mark
(86) International application number: PCT/EP2018/067342
(87) International publication number: WO 2019/002426

(56) References cited:
- EP-A1- 3 000 738
- EP-A2- 2 123 562
- WO-A1-2008/050143
- JP-A- 2002 043 135
- US-A- 3 432 116
- US-A- 5 203 516
- US-A- 6 047 918

## Description

### Field of the Invention

The invention relates to rebar tie wire reels for reinforcing bar binding machinery.

### Background to the Invention

Known reinforcing bar binding machines may comprise a chamber in which a rebar tie wire reel is mounted. Such binding machines may comprise a wire feed mechanism configured to draw wire from the rebar tie wire reel and feed it through a guide device that is configured to cause the wire to loop around a pair of reinforcing bars that are to be bound and a twisting device that can engage the looped wire and apply a twisting force by which the loops are tightened around the reinforcing bars. The rebar tie wire reel may comprise a hub with respective flanges at the ends of the hub and a wire wound onto the hub between the flanges. The rebar tie wire reel may be provided with markings that can be detected by sensors provided in the binding machine to enable the wire type and amount of rotation of the rebar tie wire reel to be determined.

EP 2 123 562 discloses rebar tie wire reel comprising:
a first flange;
a second flange spaced from said first flange;
a hub connecting said first and second flanges; and
a rebar tie wire wound around said hub,
wherein said first flange, second flange and hub are a plastics moulding and said first flange has an outwardly facing major face and an outer periphery. The outer periphery one flange is defined by a continuous surface defining a circular perimeter. The other flange has an outer periphery that is serrated. The serrations define a plurality of ratchet teeth at regularly spaced intervals about the outer periphery of the flange that are engageable by a pawl to enable braking of the rebar tie wire reel.

### Summary of the Invention

The invention provides a rebar tie wire reel as specified in claim 1.

The invention also includes a method of manufacturing a rebar tie wire reel as specified in claim 10.

The invention also includes a method of sensing rotation of a rebar tie wire reel as specified in claim 11.

### Brief Description of the Drawings

In the following disclosure, reference will be made to the drawings, in which:
Figure 1 is a schematic representation of a reinforcing bar binding machine;
Figure 2 is a schematic rear end view of the reinforcing bar binding machine with a rear end wall omitted to show a chamber that in use houses a rebar tie wire reel;
Figure 3 is a schematic side view of a rebar tie wire reel for the reinforcing bar binding machine of Figures 1 and 2;
Figure 4 is a schematic side view of the rebar tie wire reel of Figure 4;
Figure 5 is a schematic side view illustrating a modification to the rebar tie wire reel of Figures 3 and 4; and
Figure 6 is a schematic plan view of the modified rebar tie wire reel of Figure 5.

### Detailed Description

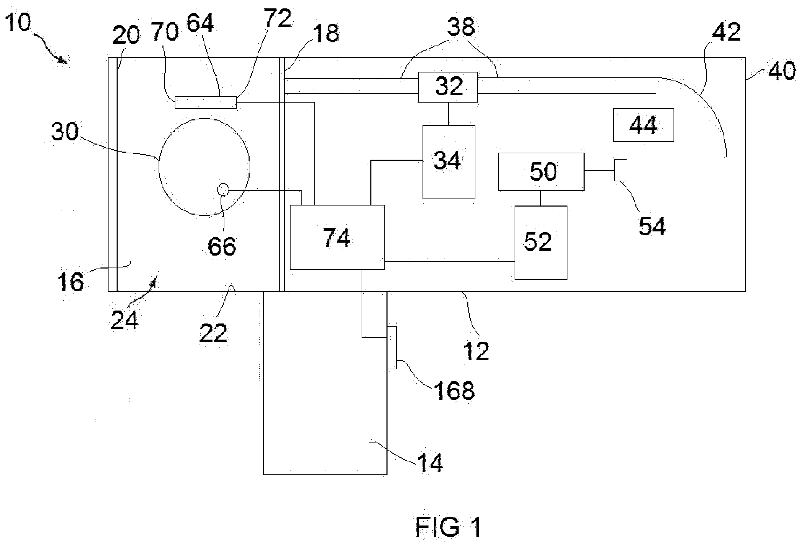

Referring to Figure 1, a reinforcing bar binding machine 10 comprises a casing 12 and a handle 14 that may be an integral part of the casing. The casing 12 may define a sidewall 16, an inner end wall 18, an outer end wall 20 and a bottom wall 22 that define a chamber 24 in which a rebar tie wire reel (not shown) can be mounted. The casing 12 may additionally define an opening disposed generally opposite the sidewall 18 that may be closed by a cover member 26. The cover member 26 may carry a reel mounting shaft 28 on which a rebar tie wire reel may be mounted and the sidewall 16 may be provided with a boss 30 that is axially aligned with the shaft 28. The cover member 26 may be hinge connected to the casing 12 and may be provided with a locking device engageable with a cooperating device provided on the casing 12 to lock the cover member in a chamber closing position. The boss 30 may be configured to locate in a recess provided in a rebar tie wire reel to assist in correctly and stably locating the rebar tie wire reel in the chamber 24.

The reinforcing bar binding machine 10 may be provided with a wire feed mechanism 32 that is driven by an electric motor 34. The wire feed mechanism 32 may comprise a pair of meshing gears provided with integral feed rollers. A tie wire from a rebar tie wire reel mounted in the chamber 24 may be fed through an opening 36 in the inner end wall 18 between the feed rollers so that it is drawn from the rebar tie wire reel when the gears are driven by the electric motor 34.

The reinforcing bar binding machine 10 may be provided with a guide system 38 through which the tie wire drawn from the rebar tie wire reel by the feed mechanism 32 is fed towards the leading end 40 of the machine. The guide system 38 includes a curved portion 42 disposed at the leading end 40. The curved portion 42 of the guide system 38 is configured to cause the wire to curl to form a loop. A wire cutter 44 is provided at the leading end 40.

The reinforcing bar binding machine 10 may be provided with a wire twisting device 50 that is actuated by an electric motor 52. The wire twisting device 50 may comprise a fork or hook 54 that can be driven back and forth to engage a tie wire looped around reinforcing bars and rotated to twist the tie wire and thereby bind the reinforcing bars.

The reinforcing bar binding machine 10 may be provided with a wire reel detection system that comprises a contact sensor 60 and a non-contact sensor 62. The contact sensor 60 may comprise an electric switch that has a movable element 64 disposed in the chamber 24. The movable element 64 may protrude from an opening in the sidewall 16 to an engagement position at which it can be engaged by a flange of a rebar tie wire reel mounted on the shaft 28. The movable element 64 may be maintained in the engagement position by one or more resilient biasing elements, which may include a compression spring. The non-contact sensor 62 may comprise an optical sensor comprising a light-emitting device 66 and a light receiving device 68 disposed generally opposite the light-emitting device. The light-emitting device 66 may be mounted in the boss 30 and the light receiving device 68 may be carried by the cover member 26.

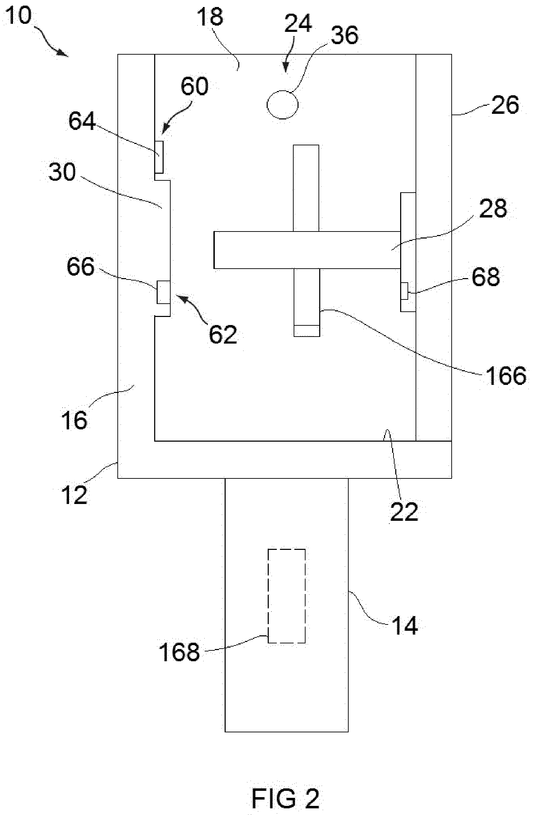

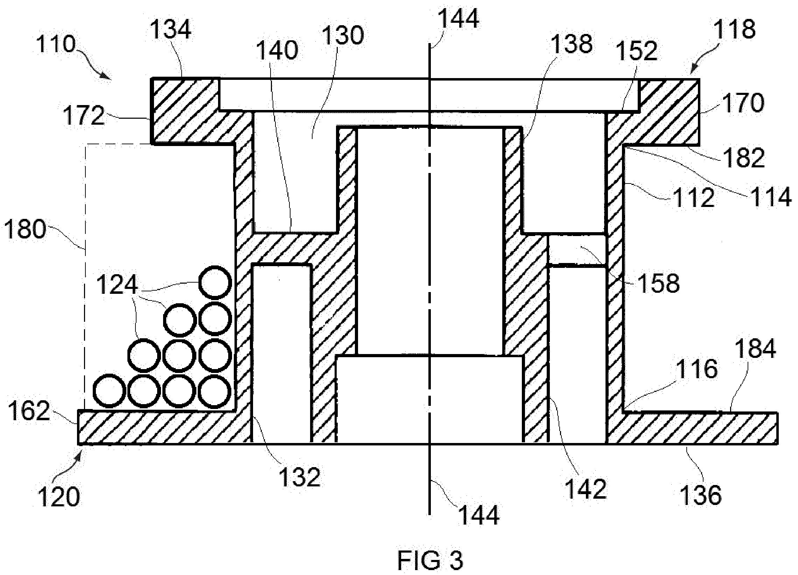

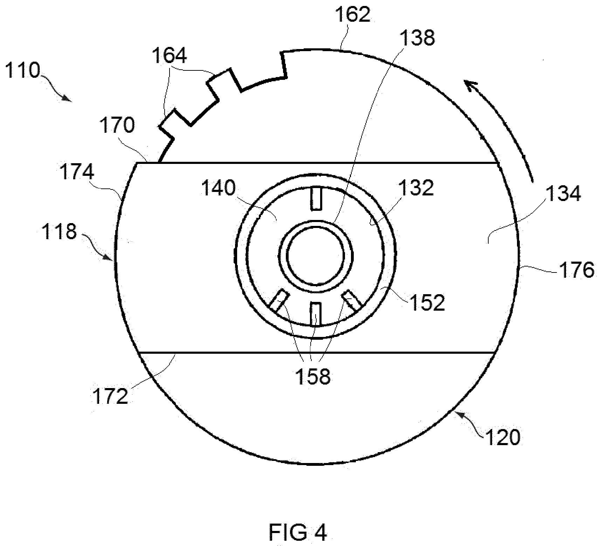

The contact sensor 60 and non-contact sensor 62 may be connected with a controller 74 that is configured to process signals from the sensors 60, 62 to determine at least one of wire type and an amount of rotation of a rebar tie wire reel mounted on the shaft 28. The controller 74 may be a microprocessor-based controller that is additionally configured to control operation of the feed mechanism 32 and twisting device 50. The controller 74 may be configured to control the amount of tie wire fed by the feed mechanism 32 and the twisting torque applied to the tie wire by the wire twisting device 50 based on determinations made using signals received from the sensors 60, 62 Referring to Figures 3 and 4, a rebar tie wire reel 110 that may be used with a reinforcing bar binding machine such as the reinforcing bar binding machine 10 shown in Figures 1 and 2 comprises a hub 112 having a first end 114 and a second end 116 opposite the first end, a first flange 118 disposed at the first end 114, a second flange 120 disposed at the second end 116 and a rebar tie wire 124 wound around the hub 112. The hub 112 and first and second flanges 118, 120 are a plastics moulding. A plastics moulding may be made of ABS resin, polyethylene or polypropylene or any other suitable plastics material that may have good resistance to bending and wear. The plastics moulding is preferably made of a black plastics material. Thus, the hub 112, first flange 114 and second flange 120 may be produced as one piece.

The hub 112 may be provided with an axially extending through-hole 130 defined by an inwardly facing wall 132 of the hub 112. The through-hole 130 may extend from an outwardly facing major face 134 of the first flange 118 to an outwardly facing major face 136 of the second flange 120. A tubular reel mounting member 138 may be provided in the through-hole 130. The reel mounting member 138 may be attached the inwardly facing wall 132 of the hub 112 by a wall 140 that extends from the inwardly facing wall to an outwardly facing wall 142 of the reel mounting member 138. The wall 140 may be disposed at least substantially perpendicular to the axis of rotation 144 of the rebar tie wire reel 110. The axis of rotation 144 is defined by the reel mounting member 138 and may be coincident with the longitudinal axis of the through-hole 130, or the hub 112. Radial support struts (not shown) may be provided between the hub 122 and reel mounting member 138 to support the reel mounting member. Such support struts may be provided above or below the wall 140 or both. The support struts may comprise generally planar bodies extending radially with respect to the axis of rotation 144. The reel mounting member 138 may comprise a lengthways extending aperture configured to be a sliding fit on the shaft 28 so that the rebar tie wire reel 110 can be mounted on and rotate relative to the shaft to allow tie wire 124 to be drawn from the rebar tie wire reel by the wire feed mechanism 32. The first flange 118 may be provided with a recess 152 surrounding the through-hole 130. The recess 152 may be configured to receive the boss 30 so that the boss can provide support for the rebar tie wire reel 110 when mounted on the shaft 28.

As shown in Figure 4, at least one through-hole 158 may be provided in the wall 140. The or each through-hole 158 is configured such that light emitted by the light emitting device 66 can pass through the rebar tie wire reel via the through-hole 130 to be received by the light receiving device 68. The or each through-hole 158 may comprise a radially extending slit, which may have a length greater than its width.

The second flange 120 may have a generally circular outer periphery 162. In some examples, the outer periphery 162 may configured to define a series of equi-spaced teeth 164 (only two of which are shown in Figure 4 for ease of representation). The teeth 164 may be configured to be engageable with a braking mechanism 166 (Figure 2) of the reinforcing bar binding machine 10.

As best seen in Figure 4, the first flange 118 has an outer periphery comprising a plurality of edges 170, 172, 174, 176. As described in more detail below, a first edge 170 and a second edge 172 are configured such that, in use, an amount of rotation of the rebar tie wire reel 110 can be determined using signals provided by the movable element 64 of the contact sensor 60 as, during rotation of the rebar tie wire reel, the first edge, major face 134 and the second edge successively travel past the movable element.

The major face 134 may comprise a planar surface. However, this is not essential an in some examples a non-planar major face 134 may be provided with a flat surface portion extending between the first and second edges 170, 172 that is configured such that, in use, it is engaged by the movable element 64 when first edge, the major face 134 and the second edge successively travel past the movable element. It may, for example be desirable, to provide cut-outs (not shown) in the major face 134 for weight reduction or material saving purposes or for ease of moulding, for example to reduce shrinkage problems that may arise when relatively thick sections cool after moulding.

Although not essential, in the illustrated example, the first and second edges 170, 172 are straight edges. The first and second edges 170, 172 may extend in parallel spaced apart relation as shown in Figure 4. The first and second edges 170, 172 may be joined by a third edge 174 and fourth edge 176 that are each curved. Preferably the curved edges 174, 176 represent segments of a circle having a diameter corresponding to the diameter of the second flange 120.

In use, the rebar tie wire reel 110 may be loaded into the chamber 24 by opening the cover member 26 and inserting the shaft 28 into the reel mounting member 138. The cover member 26 may then be closed bringing the shaft 20 into alignment with the boss 30, which engages in the recess 152. The rebar tie wire reel 110 is thus stably mounted for rotation on the shaft 28. A free end (not show) of the tie wire 124 can then be threaded through the opening 36 in the inner end wall 18 to engage with the wire feed mechanism 32. The wire feed mechanism 32 can be actuated by the electric motor 34 in response to pressure applied by a user to a trigger 168. When the wire feed mechanism 32 is actuated, tie wire 124 is drawn from the rebar tie wire reel 110 and fed towards the leading end 40 of the reinforcing bar binding machine 10. As the tie wire 124 advances towards the leading end 40 it is guided by the guide system 38. As the wire passes through the curved portion 42 of the guide system 38, it may loop around reinforcing bars (not shown) disposed adjacent the leading end 40 in a way that will be known to those skilled in the art. Once sufficient tie wire 124 is looped around the reinforcing bars, the tie wire may be cut using the cutting device 44 and the loop twisted by the wire twisting mechanism 50 to tighten it around the reinforcing bars. The wire twisting mechanism 50 may be actuated by the electric motor 52 in response to a second operation of the trigger 168.

When the wire feed mechanism 32 is actuated to draw tie wire 124 from the rebar tie wire reel 110, the rebar tie wire reel rotates on the shaft 28. As the rebar tie wire reel 110 rotates (clockwise in the illustrated example), the first edge 170 of the first flange 118 is brought into engagement with an engagement edge 70 of the movable element 64 of the contact sensor 60, which is depressed, or pushed into the side wall 16. The movable element 64 may be inclined at the engagement edge 70 so that the first edge 170 is able to progressively engage the engagement edge and depress the moveable element. As the major face 134 of the first flange 118 moves past the movable element 64 it engages the movable element and maintains it in its depressed condition. When the second edge 172 moves past the edge 72 of the movable element 64 disposed opposite the engagement edge 70, the movable element is disengaged from the major face 134 and is able to resume it non-depressed (or extended) condition. Thus, as the first then second edges 170, 172 the contact sensor 60 operates as a switch providing an electric signal to the controller 74. Continued rotation of the rebar tie wire reel 110 brings the second edge 172 into engagement with the movable element 64 causing it to depress again and again, the movable element is held in a depressed condition by engagement with the major face 134 until the first edge 170 again moves past the movable element allowing it to a resume its non-depressed (or extended) condition. Again, the depression and then release of the movable element 64 causes the contact sensor 60 to act as a switch providing an electric signal. Thus, for a full 360° rotation of the rebar tie wire reel 110, the contact sensor 60 will switch twice causing two signals to be sent to the controller 74.

As the rebar tie wire reel 110 rotates, the through-holes 158 are periodically brought into alignment with the light transmitting device 64 and light receiving device 66 of the non-contact sensor 62 so that pulses of light from the light transmitting device are received at the light receiving device. This causes pulse signals to be output to the controller 74.

The controller 74 may process the signals provided by actuation of the contact sensor 60 to determine the amount of rotation of the rebar tie wire reel. Alternatively, or additionally, the processor 74 may process the signals to determine count periods during which pulse signals from the non-contact sensor are counted. The counting of the pulsed signals may be used to determine the wire size or type so that the controller can determine the torque to be applied by the wire twisting mechanism or the amount of rotation of the rebar tie wire reel 110. Thus, for example, the through-holes 158 may be distributed about the reel mounting member 138 such that during a first count period the number of pulses is processed to determine the wire type and the combined pulse count for two count periods is processed to determine an amount of rotation.

The use of flange edges 170, 172 to determine a switching period of the contact sensor 60 allows the provision of a simple flange structure that may comprise a planar major face 134, or at least flat surface portions between the edges 170, 172 where the major face 134 is engaged by the movable element 64 of the contact sensor. It is not necessary to provide complicated topographies with projections or depressions to actuate the contact sensor. Furthermore, the edges 170, 172 may be provided by simply omitting opposed segments of a nominally circular flange, thereby making the rebar tie wire reel lighter and saving on material.

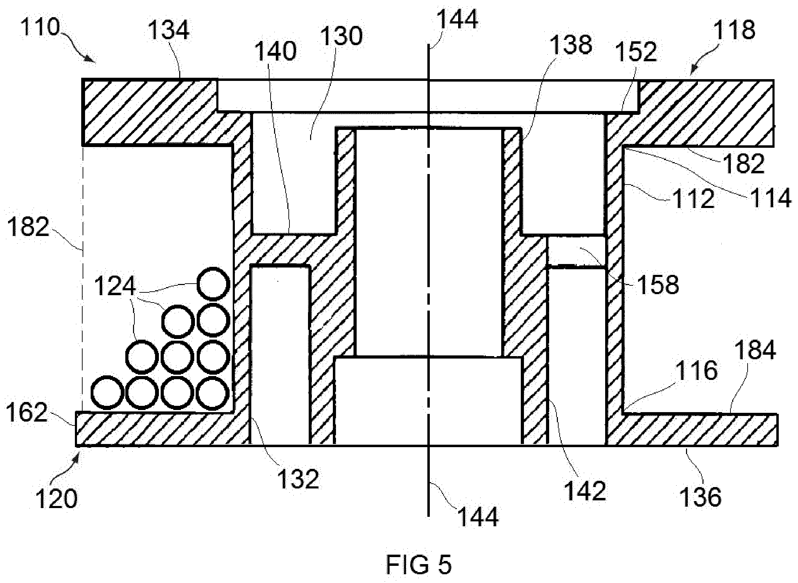

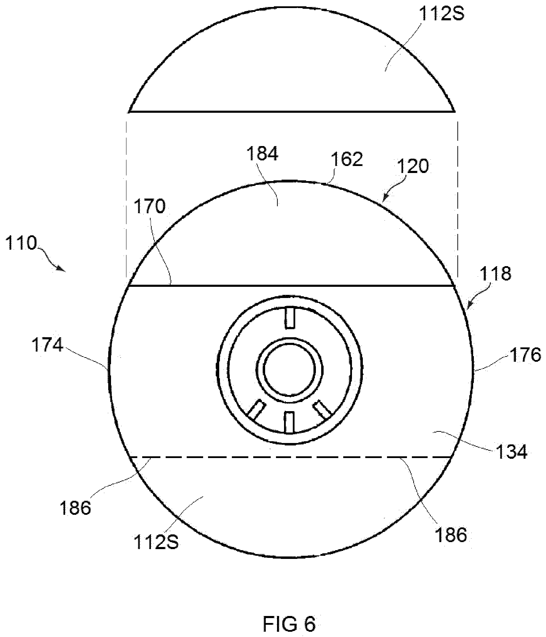

As indicated by the dashed line 180 in Figure 3 when the rebar tie wire reel 110 is fully loaded with wire 124, the wire pack is not fully contained in the space defined between opposing inner faces 182, 184 of the first and second flanges 118 120. For the purposes of winding the wire 124 onto the hub 112 during manufacture, it may be desirable for the surface areas of the opposed inner faces 182, 184 to be at least substantially the same so that, as indicated by the dashed lines 182 in Figure 5, the wire pack may be at least substantially fully contained between the first and second flanges 118, 120 during the winding on process. Once the wire winding process is completed, the first and second edges 170, 172 can then be provided by removing segments 112S of the first flange 118. This may be achieved by cutting the segments away. In some examples, as illustrated by Figure 6, the first flange 118 may be provided with lines of weakness 186 that allow segments 112S to be snapped, or broken away from the main portion of the first flange to define the first and second edges. In cases in which the material from which the hub and flanges is made of is recyclable, the removed segments 112S may be reused allowing material and weight savings to be achieved.

In the illustrated examples, it can be seen that the opposing inner faces of the first and second flanges are disposed at least substantially parallel to one another and perpendicular to the axis of rotation of the rebar tie wire reel.

In the illustrated example, the first and second edges of the flange that engages the contact sensor are disposed in parallel spaced apart relation. This is not essential. In other examples, the first and second edges may be mutually inclined so that as the rebar tie wire reel rotates through 360 degrees the contact sensor provides two signals of differing duration.

## Claims

1. A rebar tie wire reel (110) for a reinforcing bar binding machine (10), said rebar tie wire reel (110) comprising:
a first flange (118);
a second flange (120) spaced from said first flange;
a hub (112) connecting said first and second flanges; and
a rebar tie wire (124) wound around said hub,
wherein said first flange, second flange and hub are a plastics moulding and said first flange has an outwardly facing major face (134) and an outer periphery (170, 172, 174, 176), **characterised in that**:
said outer periphery is defined by a first edge (170), a second edge (172) spaced from said first edge, a third edge (174) connecting said first edge to said second edge and a fourth edge connecting said first edge to said second edge and disposed opposite and spaced from said third edge,
said major face (134) is provided with a flat surface portion extending between said first and second edges which, in use, is engaged by a movable element (64) of a contact sensor (60) when said first edge (170), said major face (134) and said second edge (172) successively travel past said movable element (64),
the arrangement being of said first and second edges (170, 172) and said flat surface portion being such that, in use, an amount of rotation of the tie wire reel can be determined using signals trigged by said movable element (64) when during rotation of said rebar tie wire reel (110), said first edge (170), said major face (134) and said second edge (172) successively travel past said movable element (64) to cause two said signals to be provided for each 360° of rotation of the rebar tie wire reel (110).

2. A rebar tie wire reel as claimed in claim 1, wherein said major face is a planar surface.

3. A rebar tie wire reel as claimed in claim 1 or 2, wherein said first and second edges (170, 172) are straight edges.

4. A rebar tie wire reel as claimed in any one of the preceding claims where said first and second edges (170, 172) are disposed in parallel relation.

5. A rebar tie wire reel as claimed in any one of the preceding claims, wherein said third and fourth edges (174, 176) are oppositely curved edges.

6. A rebar tie wire reel as claimed in claim 5, wherein said first and second edges (170, 172) define chords of an imaginary circle having a diameter defined by said third and fourth edges (174, 176).

7. A rebar tie wire reel as claimed in any one of the preceding claims, wherein said hub (112) has a longitudinal axis (144), first flange (118) has an inner face (182), said second flange (120) has an inner face (184) and said inner faces are disposed at least substantially perpendicular to said longitudinal axis.

8. A rebar tie wire reel as claimed in any one of the preceding claims, wherein said hub (112) comprises an internally disposed transverse wall (140) and at least one through-hole (158) is provided in said transverse wall for the passage of light emitted, in use, by a non-contact sensor (62) of said reinforcing bar binding machine.

9. A reinforcing bar binding machine (10) comprising a chamber (24), a reel mounting shaft (28) disposed in said chamber and a rebar tie wire reel (110) as claimed in any one of the preceding claims mounted on said reel mounting in said chamber.

10. A method of manufacturing a rebar tie wire reel (110) as claimed in any one of claims 1 to 8, said method comprising:
winding said rebar tie wire (124) onto said hub between said first flange (118) and a second flange (120); and
removing portions (112S) of said first flange (118) to form said first edge (170) and said second edge (172).

11. A method of sensing rotation of a rebar tie wire reel (110) in a reinforcing bar binding machine (10) comprising a contact sensor (60) that has a movable element (64), said method comprising:
causing said rebar tie wire reel (110) to rotate so that a surface portion of an outwardly facing major face (134) of a first flange (118) of said rebar tie wire reel engages said movable element (64) between a first edge (170) of an outer periphery of said flange and a second edge (172) of said outer periphery that is spaced apart from said first edge whereby said contact sensor (60) is caused to provide a signal to a processor (74).

12. A method as claimed in claim 11, wherein said first and second edges (170, 172) are configured to cause said contact sensor (60) to provide two said signals for each 360 degrees of rotation of said rebar tie wire reel (110).

13. A method as claimed in claim 11 or 12, further comprising processing signals provided by said contact sensor (60) to determine an amount of rotation of said rebar tie wire reel (110).

14. A method as claimed in claim 11, 12 or 13, wherein said surface portion is planar.

15. A method as claimed in any one of claims 11 to 14, further comprising detecting at least one through-hole (158) provided in an internally disposed transverse wall (140) of a hub (112)_of said rebar tie wire reel (110) with a non-contact sensor (62) and processing signals provided by said non-contact sensor and said contact sensor (60) with said processor (74) to determine at least one of type and size of a tie wire.

## Patentansprüche

1. Bewehrungsstabbindedrahthaspel (110) für eine Bewehrungsstabbindemaschine (10), wobei die genannte Bewehrungsstabbindedrahthaspel (110) Folgendes umfasst:
einen ersten Flansch (118);
einen von dem genannten ersten Flansch beabstandeten zweiten Flansch (120);
eine Nabe (112), die den genannten ersten und zweiten Flansch verbindet; und
einen um die genannte Nabe gewickelten Bewehrungsstabbindedraht (124),
wobei der genannte erste Flansch, zweite Flansch und die Nabe ein Kunststoffformteil sind und der genannte erste Flansch eine nach außen weisende Hauptfläche (134) und einen Außenumfang (170, 172, 174, 176) aufweist, **dadurch gekennzeichnet, dass**:
der genannte Außenumfang durch eine erste Kante (170), eine von der genannten ersten Kante beabstandete zweite Kante (172), eine die genannte erste Kante mit der genannten zweiten Kante verbindende dritte Kante (174) und eine vierte Kante definiert ist, die genannte erste Kante mit der genannten zweiten Kante verbindet und gegenüber und beabstandet von der dritten Kante angeordnet ist,
die genannte Hauptfläche (134) mit einem flachen Oberflächenabschnitt versehen ist, der sich zwischen der genannten ersten und zweiten Kante erstreckt und beim Gebrauch mit einem beweglichen Element (64) eines Kontaktsensors (60) in Eingriff kommt, wenn die genannte erste genannte Kante (170), die genannte Hauptfläche (134) und die genannte zweite Kante (172) nacheinander das genannte bewegliche Element (64) passieren,
wobei die Anordnung der genannten ersten und zweiten Kante (170, 172) und des genannten flachen Oberflächenabschnitts derart ist, dass beim Gebrauch ein Betrag an Drehung der Bindedrahthaspel mit Hilfe von Signalen bestimmt werden kann, die durch das genannte bewegliche Element (64) ausgelöst werden, wenn sich während der Drehung der genannten Bewehrungsstabbindedrahthaspel (110) die genannte erste Kante (170), die genannte Hauptfläche (134) und die genannte zweite Kante (172) nacheinander an dem genannten beweglichen Element (64) vorbeibewegen, um zu bewirken, dass zwei genannte Signale für jede 360°-Drehung der Bewehrungsstabbindedrahthaspel (110) geliefert werden.

2. Bewehrungsstabbindedrahthaspel nach Anspruch 1, wobei die genannte Hauptfläche eine ebene Fläche ist.

3. Bewehrungsstabbindedrahthaspel nach Anspruch 1 oder 2, wobei die genannte erste und zweite Kante (170, 172) gerade Kanten sind.

4. Bewehrungsstabbindedrahthaspel nach einem der vorherigen Ansprüche, wobei die genannte erste und zweite Kante (170, 172) parallel zueinander angeordnet sind.

5. Bewehrungsstabbindedrahthaspel nach einem der vorherigen Ansprüche, wobei die genannte dritte und vierte Kante (174, 176) entgegengesetzt gekrümmte Kanten sind.

6. Bewehrungsstabbindedrahthaspel nach Anspruch 5, wobei die genannte erste und zweite Kante (170, 172) Sehnen eines imaginären Kreises definieren, dessen Durchmesser durch die genannte dritte und vierte Kante (174, 176) definiert ist.

7. Bewehrungsstabbindedrahthaspel nach einem der vorherigen Ansprüche, wobei die genannte Nabe (112) eine Längsachse (144) hat, der erste Flansch (118) eine Innenfläche (182) hat, der genannte zweite Flansch (120) eine Innenfläche (184) hat und die genannten Innenflächen zumindest im Wesentlichen lotrecht zu der genannten Längsachse angeordnet sind.

8. Bewehrungsstabbindedrahthaspel nach einem der vorherigen Ansprüche, wobei die genannte Nabe (112) eine innen angeordnete Querwand (140) aufweist und in der genannten Querwand mindestens ein Durchgangsloch (158) für den Durchgang von Licht vorgesehen ist, das beim Gebrauch von einem berührungslosen Sensor (62) der genannten Bewehrungsstabbindemaschine ausgesandt wird.

9. Bewehrungsstabbindemaschine (10) mit einer Kammer (24), einer in der genannten Kammer angeordneten Haspelmontagewelle (28) und einer Bewehrungsstabbindedrahthaspel (110) nach einem der vorherigen Ansprüche, die auf der genannten Haspelhalterung in der genannten Kammer montiert ist.

10. Verfahren zur Herstellung einer Bewehrungsstabbindedrahthaspel (110) nach einem der Ansprüche 1 bis 8, wobei das genannte Verfahren Folgendes beinhaltet:
Wickeln des genannten Bewehrungsstabbindedrahtes (124) auf die genannte Nabe zwischen dem genannten ersten Flansch (118) und einem zweiten Flansch (120); und
Entfernen von Teilen (112S) des genannten ersten Flanschs (118), um die genannte erste Kante (170) und die genannte zweite Kante (172) zu bilden.

11. Verfahren zum Erfassen der Drehung einer Bewehrungsstabbindedrahthaspel (110) in einer Bewehrungsstabbindemaschine (10) mit einem Kontaktsensor (60), der ein bewegliches Element (64) aufweist, wobei das genannte Verfahren Folgendes beinhaltet:
Bewirken, dass sich die genannte Bewehrungsstabbindedrahthaspel (110) dreht, so dass ein Oberflächenabschnitt einer nach außen weisenden Hauptfläche (134) eines ersten Flanschs (118) der genannten Bewehrungsstabbindedrahthaspel mit dem genannten beweglichen Element (64) zwischen einer ersten Kante (170) eines Außenumfangs des genannten Flanschs und einer von der genannten ersten Kante beabstandeten zweiten Kante (172) des genannten Außenumfangs in Eingriff kommt, wodurch der genannte Kontaktsensor (60) veranlasst wird, ein Signal an einen Prozessor (74) zu liefern.

12. Verfahren nach Anspruch 11, wobei die genannte erste und zweite Kante (170, 172) konfiguriert sind zum Bewirken, dass der genannte Kontaktsensor (60) zwei genannte Signale für jeweils 360 Grad Drehung der genannten Bewehrungsstabbindedrahtspule (110) liefert.

13. Verfahren nach Anspruch 11 oder 12, das ferner das Verarbeiten von Signalen beinhaltet, die von dem genannten Kontaktsensor (60) bereitgestellt werden, um einen Betrag der Drehung der genannten Bewehrungsstabbindedrahthaspel (110) zu bestimmen.

14. Verfahren nach Anspruch 11, 12 oder 13, wobei der genannte Oberflächenabschnitt planar ist.

15. Verfahren nach einem der Ansprüche 11 bis 14, das ferner das Erkennen mindestens eines in einer innen angeordneten Querwand (140) einer Nabe (112) der genannten Bewehrungsstabbindedrahthaspel (110) vorgesehenen Durchgangslochs (158) mit einem berührungslosen Sensor (62) und das Verarbeiten von von dem genannten berührungslosen Sensor und dem genannten Kontaktsensor (60) gelieferten Signalen mit dem genannten Prozessor (74) beinhaltet, um Typ und/oder Größe eines Bindedrahtes zu bestimmen.

## Revendications

1. Bobine de fil pour ligature de barres d'armature (110) pour une machine de liaison de barres de renfort (10), ladite bobine de fil pour ligature de barres d'armature (110) comportant :
une première flasque (118) ;
une deuxième flasque (120) espacée par rapport à ladite première flasque ;
un moyeu (112) raccordant lesdites première et deuxième flasques ; et
un fil pour ligature de barres d'armature (124) enroulé autour dudit moyeu,
dans laquelle ladite première flasque, ladite deuxième flasque et ledit moyeu sont un moulage de plastique et ladite première flasque a une face principale orientée vers l'extérieur (134) et une périphérie extérieure (170, 172, 174, 176), **caractérisée en ce que** :
ladite périphérie extérieure est définie par un premier bord (170), un deuxième bord (172) espacé par rapport audit premier bord, un troisième bord (174) raccordant ledit premier bord audit deuxième bord et un quatrième bord raccordant ledit premier bord audit deuxième bord et disposé de manière opposée et espacée par rapport audit troisième bord,
ladite face principale (134) comporte une partie formant surface plate s'étendant entre lesdits premier et deuxième bords qui, lors de l'utilisation, est mise en prise par un élément mobile (64) d'un capteur à contact (60) quand ledit premier bord (170), ladite face principale (134) et ledit deuxième bord (172) passent de manière successive devant ledit élément mobile (64),
l'agencement étant que lesdits premier et deuxième bords (170, 172) et ladite partie formant surface plate sont tels que, lors de l'utilisation, une quantité de rotation de la bobine de fil pour ligature peut être déterminée en utilisant des signaux déclenchés par ledit élément mobile (64) quand, au cours de la rotation de ladite bobine de fil pour ligature de barres d'armature (110), ledit premier bord (170), ladite face principale (134) et ledit deuxième bord (172) passent de manière successive devant ledit élément mobile (64) pour amener deux dits signaux à être fournis pour chaque 360° de rotation de la bobine de fil pour ligature de barres d'armature (110).

2. Bobine de fil pour ligature de barres d'armature selon la revendication 1, dans laquelle ladite face principale est une surface plane.

3. Bobine de fil pour ligature de barres d'armature selon la revendication 1 ou la revendication 2, dans laquelle lesdits premier et deuxième bords (170, 172) sont des bords droits.

4. Bobine de fil pour ligature de barres d'armature selon l'une quelconque des revendications précédentes, dans laquelle lesdits premier et deuxième bords (170, 172) sont disposés selon une relation parallèle.

5. Bobine de fil pour ligature de barres d'armature selon l'une quelconque des revendications précédentes, dans laquelle lesdits troisième et quatrième bords (174, 176) sont des bords courbes de manière opposée.

6. Bobine de fil pour ligature de barres d'armature selon la revendication 5, dans laquelle lesdits premier et deuxième bords (170, 172) définissent des cordes d'un cercle imaginaire ayant un diamètre défini par lesdits troisième et quatrième bords (174, 176).

7. Bobine de fil pour ligature de barres d'armature selon l'une quelconque des revendications précédentes, dans laquelle ledit moyeu (112) a un axe longitudinal (144), ladite première flasque (118) a une face intérieure (182), ladite deuxième flasque (120) a une face intérieure (184) et lesdites faces intérieures sont disposées de manière au moins sensiblement perpendiculaire par rapport audit axe longitudinal.

8. Bobine de fil pour ligature de barres d'armature selon l'une quelconque des revendications précédentes, dans laquelle ledit moyeu (112) comporte une paroi transversale disposée intérieurement (140) et au moins un trou traversant (158) est mis en œuvre dans ladite paroi transversale pour le passage de lumière émise, lors de l'utilisation, par un capteur sans contact (62) de ladite machine de liaison de barres de renfort.

9. Machine de liaison de barres de renfort (10) comportant une chambre (24), un arbre de montage de bobine (28) disposé dans ladite chambre et une bobine de fil pour ligature de barres d'armature (110) selon l'une quelconque des revendications précédentes montée sur ledit arbre de montage de bobine dans ladite chambre.

10. Procédé de fabrication d'une bobine de fil pour ligature de barres d'armature (110) selon l'une quelconque des revendications 1 à 8, ledit procédé comportant les étapes consistant à :
enrouler ledit fil pour ligature de barres d'armature (124) sur ledit moyeu entre ladite première flasque (118) et une deuxième flasque (120) ; et
retirer des parties (112S) de ladite première flasque (118) pour former ledit premier bord (170) et ledit deuxième bord (172) .

11. Procédé de détection de rotation d'une bobine de fil pour ligature de barres d'armature (110) dans une machine de liaison de barres de renfort (10) comportant un capteur à contact (60) qui a un élément mobile (64), ledit procédé comportant l'étape consistant à :
amener ladite bobine de fil pour ligature de barres d'armature (110) à tourner de telle sorte qu'une partie formant surface d'une face principale orientée vers l'extérieur (134) d'une première flasque (118) de ladite bobine de fil pour ligature de barres d'armature met en prise ledit élément mobile (64) entre un premier bord (170) d'une périphérie extérieure de ladite flasque et un deuxième bord (172) de ladite périphérie extérieure qui est espacé par rapport audit premier bord ce par quoi ledit capteur à contact (60) est amené à fournir un signal à un processeur (74).

12. Procédé selon la revendication 11, dans lequel lesdits premier et deuxième bords (170, 172) sont configurés pour amener ledit capteur à contact (60) à fournir deux dits signaux pour chaque 360 degrés de rotation de ladite bobine de fil pour ligature de barres d'armature (110).

13. Procédé selon la revendication 11 ou la revendication 12, comportant par ailleurs l'étape consistant à traiter des signaux fournis par ledit capteur à contact (60) pour déterminer une quantité de rotation de ladite bobine de fil pour ligature de barres d'armature (110).

14. Procédé selon la revendication 11, la revendication 12 ou la revendication 13, dans lequel ladite partie formant surface est plane.

15. Procédé selon l'une quelconque des revendications 11 à 14, comportant par ailleurs l'étape consistant à détecter au moins un trou traversant (158) mis en œuvre dans une paroi transversale disposée intérieurement (140) d'un moyeu (112) de ladite bobine de fil pour ligature de barres d'armature (110) avec un capteur sans contact (62) et l'étape consistant à traiter des signaux fournis par ledit capteur sans contact et ledit capteur à contact (60) avec ledit processeur (74) pour déterminer au moins l'un parmi le type et la dimension d'un fil pour ligature.
